# EUROPEAN PATENT APPLICATION

(11) **EP 1 653 095 A2**
(43) Date of publication of application: **03.05.2006**
(21) Application number: 05022001.1
(22) Date of filing: 10.10.2005
(51) Int. Cl.: F16C 19/30, F16C 33/48

(54) **Two row thrust roller bearing with a cage having retaining protrusions formed by plastic deformation**

(30) Priority: 26.10.2004 JP 2004310713
(71) Applicant: NTN CORPORATION, Osaka (JP)
(72) Inventor: Yamamoto, Kazuyuki, Iwata-shi Shizuoka-ken (JP); Obayashi, Kousuke, Iwata-shi Shizuoka-ken (JP)
(74) Representative: Thielmann, Andreas

(57) **Abstract**

It is an object of the present invention to provide a double row thrust needle roller bearing which can suppress the differential slippage of the needle rollers under a severe working condition and improve its durability without increasing the processing cost for the majority variety/minority lot production. According to the present invention, there is provided a double row thrust needle roller bearing (1) comprising a plurality of needle rollers (2) arranged at at least two rows in a radial direction, and an annular cage (3) formed with a plurality of pockets (4) for holding needle rollers (2) characterized in that each pocket (4) being formed as a rectangular configuration having a length of its radial side longer than that of each needle roller (2) and a length of its circumferential side larger than the diameter of each needle roller (2), and that each needle roller (2) being held within each pocket (4) of the cage (3) by nailed portions (5) formed near radially extending side walls (4a) of the pockets (4) at either sides of each needle roller (2) along its longitudinal direction by plastically deforming the cage (3) at a substantially middle portion of the longitudinal length of the needle roller (2) so as to overhang each nailed portion (5) into the pocket (4) over the needle roller (2).

## Description

### BACKGROUND OF THE INVENTION

### Field of the Invention

The present invention relates to a double row thrust needle roller bearing used for an automatic transmission and a compressor of air conditioner of an automobile, a continuously variable transmission, an electric brake etc. Although the "a needle roller" is classified in Japanese Industrial Standards (JIS) as "a cylindrical roller having a diameter less than 5 mm and a ratio of length/diameter of 3-10", the term "needle roller" used herein has a broader meaning without being limited to the definition of JIS. In other word it should be appreciated that the term "needle roller" in this specification includes both "long cylindrical roller" and "cylindrical roller" defined in JIS.

### Description of Background Art

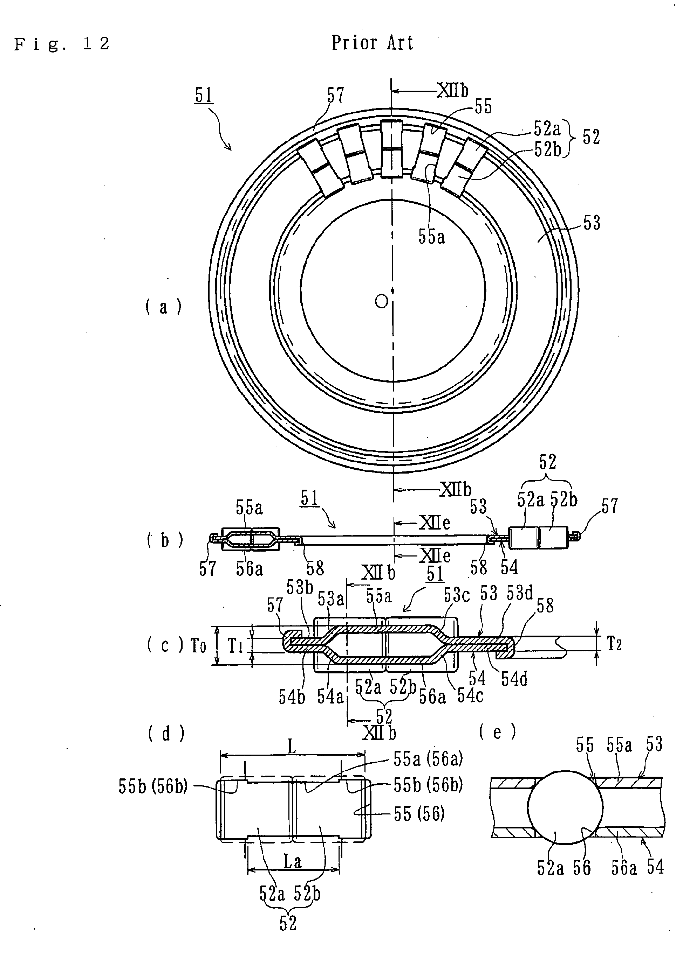

Since the thrust needle roller bearing comprises needle rollers, a cage and bearing ring(s) and has a structure of line contact between the needle roller and the bearing ring, it has advantage that it exhibits high loading capacity as well as high rigidity despite of its small projected area. This is a reason that it is widely used as a thrust-load supporting part in mechanical apparatus such as an automatic transmission and a compressor of air conditioner of an automobile, a continuously variable transmission, an electric brake etc. In these industrial fields, the needle roller bearing is obliged to be used under severe conditions such as under lean lubrication and high rotation speed etc. pursuing light weight and small size of the bearing. Accordingly, the present applicant has proposed a double row thrust needle roller bearing as shown in Fig. 12.

The double row thrust needle roller bearing 51 comprises a plurality of needle rollers 52, and two annular cages 53and 54 for holding the needle rollers 52 at a predetermined pitch in the circumferential direction. The cages 53 and 54 are made of cold rolled steel plate (e.g. JIS SPC etc.) by press-forming thereof and formed with a plurality of rectangular pockets 55 and 56 each having a radial (longitudinal) length longer than the length "L" of the needle roller 52. Oppositely projecting roller holding portions 55a and 56a are formed on either longitudinal edges of each pocket 55 and 56 for holding the needle rollers 52 with sandwiching them in the thickness direction.

The needle rollers 52 comprises radially outer needle rollers 52a and radially inner needle rollers 52b which are arranged as a double row manner within the pockets 55 and 56. The double row arrangement enables to reduce the revolution velocity difference between outer and inner portions of the needle rollers and thus to reduce their slippage relative to bearing rings (not shown). Accordingly, heat generation in the contacting portions is reduced and surface damages and surface peeling are also prevented.

As shown in Fig. 12 (d), the radial length "La" of the roller holding portions 55a and 56a is shorter than the longitudinal length "L" of the needle rollers 52. Thus recesses 55b and 56b formed at either sides of the roller holding portions 55a and 56a enables lubrication oil to easily pass therethrough.

As shown in Fig. 12 (c), the radially either sides of the roller holding portion 55a of the upper cage 53 are formed by inclined portions 53a and 53c folded at either ends of the roller holding portion 55a and by outer and inner flat portions 53b and 53d folded at the ends of the inclined portions 53a and 53c. Similarly, inclined portions 54a and 54c as well as outer and inner flat portions 54b and 54d are formed on the lower cage 54.

The two cages 53 and 54 are laid one on top of the other and united by folding the radially outermost edge of the outer flat portion 54b upward to form a caulked portion 57 and by folding the radially innermost edge of the inner flat portion 53d downward to form a caulked portion 58. Thus two cages 53 and 54 are securely united by the caulked portions 57 and 58 so that they could never be separated during operation of the bearing.

In a condition in which two cages 53 and 54 are securely united, the thickness "T0" of the roller holding portions 55a and 56a is larger than the thickness "T1" and "T2" of the radially outer and inner flat portions.

The double row thrust roller bearing comprising two cages 53 and 54 can improve flow-in/flow-out ability of lubricant and thus prevent seizure of the bearing. Thus the durability of the bearing can be also improved (see Japanese Laid-open Patent Publication No. 36849/2004).

Although the double row thrust needle roller bearing of the prior art has advantages mentioned above and is suitable for the minority variety/majority lot production, it is not suitable for the majority variety/minority lot production required for satisfying a recent tendency of diversification of needs because of increase of manufacturing cost owing to increase of a ratio of die manufacturing cost etc. relative to a processing cost.

### SUMMARY OF THE INVENTION

It is, therefore, an object of the present invention to provide a double row thrust needle roller bearing which can suppress the differential slippage of the needle rollers under a severe working condition and improve its durability without increasing the processing cost for the majority variety/minority lot production.

### [Means for achieving the object]

For achieving the object of the present invention above, there is provided, according to claim 1, a double row thrust needle roller bearing comprising a plurality of needle rollers arranged at at least two rows in a radial direction, and an annular cage formed with a plurality of pockets for holding needle rollers characterized in that each pocket being formed as a rectangular configuration having a length of its radial side longer than that of each needle roller and a length of its circumferential side larger than the diameter of each needle roller, and each needle roller being held within each pocket of the cage by nailed portions formed near radially extending side walls of the pockets at either sides of each needle roller along its longitudinal direction by plastically deforming the cage at a substantially middle portion of the longitudinal length of the needle roller so as to overhang each nailed portion into the pocket over the needle roller.

According to the present invention, since the double row thrust needle roller bearing comprises a plurality of needle rollers arranged at at least two rows in a radial direction, and an annular cage formed with a plurality of pockets for holding needle rollers and is characterized in that each pocket is formed as a rectangular configuration having a length of its radial side longer than that of each needle roller and a length of its circumferential side larger than the diameter of each needle roller, and each needle roller is held within each pocket of the cage by nailed portions formed near radially extending side walls of the pockets at either sides of each needle roller along its longitudinal direction by plastically deforming the cage at a substantially middle portion of the longitudinal length of the needle roller so as to overhang each nailed portion into the pocket over the needle roller, the revolution velocity difference between the radially outerand inner portions of the needle rollers is reduced. Thus it is possible to suppress the slippage of the needle rollers against the bearing ring surface and therefore to reduce the heat generation in the contact portions between the structural elements so that the surface damage and the surface peeling are prevented. Accordingly, it is possible to provide a double row thrust needle roller bearing which can suppress the differential slippage of the needle rollers under a severe working condition and improve its durability without increasing the processing cost for the majority variety/minority lot production.

Preferably, the cage may be made by cutting soft metal material according to claim 2. This makes it possible to easily make the nailed portions by plastically deforming the soft metal material by using a caulking tool.

In addition, the nailed portion may be formed one at one longitudinal side wall of each pocket corresponding to each needle roller, and the length of each nailed portion may be set 60% or more the length of each needle roller according to claim 3, and two nailed portions may be formed at each longitudinal side wall of the pocket corresponding to each needle roller symmetrically with the other two nailed portions formed at the other longitudinal side wall of each pocket, and the length of each nailed portion may be set 15% or more the length of each needle roller according to claim 4. In this case, recesses formed between the nailed portions enable the lubrication oil to easily pass therethrough.

According to claim 5, a clearance between the needle roller and the pocket in the thickness direction of the cage may be larger than that in the circumferential direction. Accordingly the needle rollers are firmly guided by the side walls of the pockets not by the inner walls of the nailed portions. Thus it is possible to stabilize the motion of the needle rollers and to prevent absence of oil film at the contact portions with the pockets.

### [Effects of the Invention]

According to the present invention, the revolution velocity difference between the radially outer and inner portions of the needle rollers is reduced. Thus it is possible to suppress the slippage of the needle rollers against the bearing ring surface and therefore to reduce the heat generation in the contact portions between the structural elements so that the surface damage and the surface peeling are prevented. Accordingly, it is possible to provide a double row thrust needle roller bearing which can suppress the differential slippage of the needle rollers under a severe working condition and improve its durability without increasing the processing cost for the majority variety/minority lot production.

### [Best mode for carrying out the present Invention]

A double row thrust needle roller bearing comprising a plurality of needle rollers arranged at at least two rows in a radial direction, and an annular cage formed with a plurality of pockets for holding needle rollers characterized in that each pocket being formed as a rectangular configuration having a length of its radial side longer than that of each needle roller and a length of its circumferential side larger than the diameter of each needle roller, and in that each needle roller being held within each pocket of the cage by nailed portions formed near radially extending side walls of the pockets at either sides of each needle roller along its longitudinal direction by plastically deforming the cage at a substantially middle portion of the longitudinal length of the needle roller so as to overhang each nailed portion into the pocket over the needle roller.

### BRIEF DESCRIPTION OF THE DRAWINGS

Additional advantages and features of the present invention will become apparent from the subsequent description and the appended claims, taken in conjunction with the accompanying drawings, wherein:
- Fig. 1(a): is a plan view of a double row thrust needle roller bearing of a first embodiment of the present invention, and Fig. 1(b) is a cross-sectional view taken along a line Ib-O-Ib in Fig. 1(a);
- Fig. 2(a): is a partial enlarged view of Fig. 1(a), and Fig. 2(b) is a similar partial enlarged view of a modified embodiment of Fig. 2(a);
- Fig. 3: is a cross-sectional view taken along a line III-III in Fig. 2(a);
- Fig. 4(a): is a plan view of a double row thrust needle roller bearing of a second embodiment of the present invention, and Fig. 4(b) is a cross-sectional view taken along a line IVb-O-IVb in Fig. 4(a);
- Fig. 5(a): is a partial enlarged view of Fig. 4(a), and Fig. 5(b) is a similar partial enlarged view of a modified embodiment of Fig. 5(a);
- Fig. 6: is a cross-sectional view taken along a line VI-VI in Fig. 5(a);
- Fig. 7(a): is a plan view of a double row thrust needle roller bearing of a third embodiment of the present invention, and Fig. 7(b) is a plan view of a modified embodiment of Fig. 7(a);
- Fig. 8(a): is a plan view of a double row thrust needle roller bearing of a fourth embodiment of the present invention, and Figs. 8(b) and 8(c) are plan views of modified embodiments of Fig. 8(a);
- Fig. 9(a): is a plan view of a double row thrust needle roller bearing of a fifth embodiment of the present invention, and Figs. 9(b) and 9(c) are plan views of modified embodiments of Fig. 9 (a) ;
- Fig. 10(a): is a plan view of a double row thrust needle roller bearing of a sixth embodiment of the present invention, and Figs. 10(b) and 10(c) are plan views of modified embodiments of Fig. 10 (a) ;
- Fig. 11: is a plan view of a double row thrust needle roller bearing of a seventh embodiment of the present invention; and
- Fig. 12(a): is a plan view of a double row thrust needle roller bearing of the prior art, Fig. 12(b) is a cross-sectional view taken along a line XIIb-O-XIIb in Fig. 12(a), Fig. 12(c) is a partial enlarged view of Fig. 12(b), Fig. 12(d) is a partial enlarged view of a pocket portion, and Fig. 12(e) is an enlarged cross- sectional view taken along a line XIIe-XIIe in Fig. 12(b).

### DESCRIPTION OF THE PREFERRED EMBODIMENTS

### [First embodiment]

A preferred embodiment of the present invention will be hereinafter described with reference to accompanied drawings.

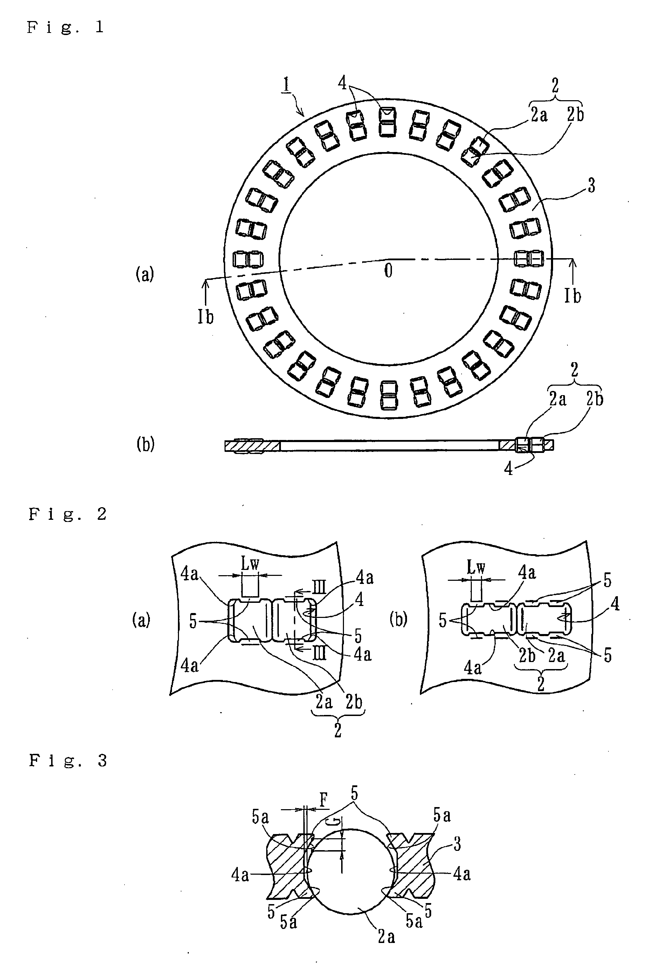

Fig. 1(a) is a plan view of a double row thrust needle roller bearing of a first embodiment of the present invention, and Fig. 1(b) is a cross-sectional view taken along a line Ib-O-Ib in Fig. 1(a); Fig. 2(a) is a partial enlarged view of Fig. 1(a), and Fig. 2(b) is a similar partial enlarged view of a modified embodiment of Fig. 2(a); Fig. 3 is a cross-sectional view taken along a line III-III in Fig. 2(a).

The double row thrust needle roller bearing 1 comprises a plurality of needle rollers 2, and a cage 3 for holding the needle rollers 2 at a predetermined pitch in the circumferential direction. The cage 3 is made by cutting soft metal materials such as copper alloy e.g. high tensile brass casting (JIS CAC 3 etc.) and aluminum/bronze casting (JIS CAC 7 etc.), aluminum, aluminum alloy, or aluminum alloy casting (JIS AC etc.), and has a plurality of pockets 4 each being formed as a rectangular configuration having a length of its longitudinal (radial) side longer than that of each needle roller 2 and a length of its circumferential side larger than the diameter of each needle roller 2. The pockets 4 may be formed by stamping other than cutting.

The needle rollers 2 comprise radially outer and inner needle rollers 2a and 2b and are arranged within pockets 4 in a double row arrangement. The revolution velocity difference between the radially outer and inner needle rollers can be reduced by the double row arrangement of the needle rollers and thus slippage of each needle roller against bearing ring surface (not shown) is suppressed. Accordingly, heat generation in the contacting portions is reduced and surface damages and surface peeling are also prevented. Although it is shown that radially outer needle rollers 2a and radially inner needle rollers 2b have a same length each other, it is possible to make the length of the radially outer needle rollers longer than that of the radially inner needle roller so as to increase the load supporting capacity of the radially outer needle rollers. Also although it is shown that the end face of each needle roller 2a and 2b has a flat configuration (so-called "F" end face), other configurations e.g. spherical configuration (so-called "A" end face) or combination of "F" and "A" end faces may be used.

As shown in Fig. 2(a), a plurality of needle rollers 2a and 2b are held within the pockets 4 and prevented from being fallen out therefrom by nailed portions 5 formed near longitudinal (i.e. radially extending) side walls 4a of the pockets 4 at either sides of each needle roller 2a and 2b along its longitudinal direction by plastically deforming the cage 3 by using a caulking tool such as a punch at a substantially middle portion of the longitudinal length of the needle roller 2 so as to overhang each nailed portion 5 into the pocket 4 over the needle roller 2. If the length "Lw" is less than 60 • "of that of the needle roller 2a and 2b, it is afraid that the needle roller holding force, especially a force for limiting skewing of the needle rollers 2a and 2b is lowered. Accordingly, it is preferable that the length "Lw" of the nailed portion 5 is set more than 60% of that of the needle rollers 2a and 2b.

If the length of the needle rollers 2a and 2b is more than 6mm, two nailed portions 5 are formed at each longitudinal side wall 4a of the pocket 4 corresponding to each needle roller 2 equally, i.e. symmetrically with the other two nailed portions 5 formed at the other longitudinal side wall of each pocket 4. Accordingly, recesses formed between the nailed portions 5 enable the lubrication oil to easily pass therethrough. In this case, since the strength of the nailed portions 5 would be insufficient if the length "Lw" of the nailed portions 5 is less than 15% of that of the needle rollers 2a and 2b, it is preferable to set the length of nailed portions 5 at 15 • "or more of the length "Lw" of the needle rollers 2a and 2b.

Although the length of each needle roller 2a and 2b is larger than 6mm, two nailed portions 5 (Fig. 2(b)) may be connected each other and one nailed portion 5 may be provided similarly to the embodiment of Fig. 2(a). In this case, however, the length "Lw" of the nailed portion 5 should be set more than 60% of the length of the needle rollers 2a and 2b.

According to the present embodiment, since the double row needle rollers 2a and 2b are adapted to be held by the nailed portions 5 formed by plastically deforming the cage 3 of soft metal material such as high tensile brass casting or aluminum alloy so as to overhang each nailed portion 5 into the pocket 4 over the needle roller 2, it is possible to provide a double row thrust needle roller bearing in which the nailed portions 5 can be easily formed and thus the needle rollers 2 can be held with a simple structure and which can suppress the differential slippage of the needle rollers under a severe working condition and improve its durability without increasing the processing cost for the majority variety/minority lot production.

It is of course important that the needle rollers 2 should never be sunk below the surface of the cage 3 and thus a relation between the needle roller 2a and the pocket 4 is established so that the needle roller 2a is guided by the longitudinal side walls 4a of the pocket 4 as shown in Fig. 3. That is, a gap "G" in a thickness direction between the needle roller 2a and the inner surface 5a of the nailed portion 5 is set so that it is larger than a circumferential gap "F" (F<G) between the needle roller 2a and the side wall 4a of the pocket 4. In other word, the gaps between the needle roller 2a and the pocket 4 are set so that the circumferential gap "F" is smaller than the gap "G" in the thickness direction. If the gap relation would be F>G, the needle roller 2a will be guided by the inner surface 5a of the nailed portion 5 and thus the behavior of the needle roller 2a will become instable and the problem of absence of oil film will be generated. The total length of the opposite nailed portions 5 overhanged into the pocket 4 may be suitably selected any dimension less than the diameter of the needle roller 2a.

For achieving extension of the life of the double row thrust needle roller bearing, it is possible to obtain effects of suppressing heat generation at the bearing portion by optimizing the pocket gap to assure the oil flowability an by defining the motion (degree of freedom) of the needle roller 2a. When the roller guide portion and the roller stopper portion are formed by separate portions as in the present embodiment, the optimized value of the pocket gap is set within a range of 0.05~0.25 mm. The term "pocket gap" herein means a gap between the needle roller 2a and the one roller guide portion of the cage 3 when the needle roller 2a is contacted with the other roller guide portion of the cage 3 keeping the center of the needle roller 2a corresponding to the center in the thickness (i.e. height) direction.

### [Second embodiment]

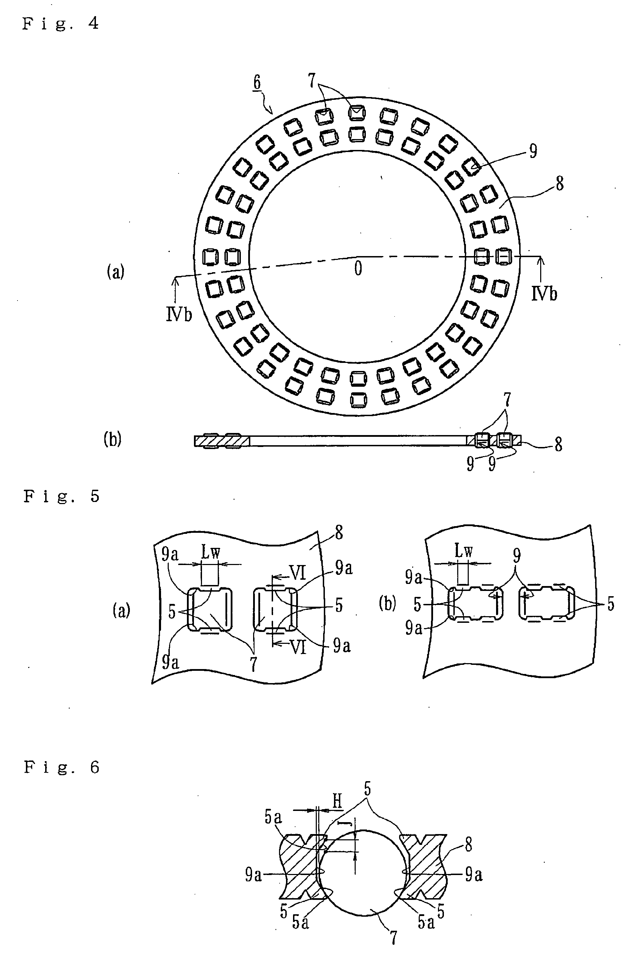

Fig. 4(a) is a plan view of a double row thrust needle roller bearing of a second embodiment of the present invention, and Fig. 4(b) is a cross-sectional view taken along a line IVb-O-IVb in Fig. 4(a); Fig. 5(a) is a partial enlarged view of Fig. 4(a), and Fig. 5(b) is a similar partial enlarged view of a modified embodiment of Fig. 5(a); Fig. 6 is a cross-sectional view taken along a line VI-VI in Fig. 4(a).

The double row thrust needle roller bearing 6 comprises a plurality of needle rollers 7, and a cage 8 for holding the needle rollers 7 at a predetermined pitch in the circumferential direction. Similarly to the first embodiment, the cage 8 is made by cutting soft metal materials such as copper alloy e.g. high tensile brass casting (JIS CAC 3 etc.) and aluminum/bronze casting (JIS CAC 7 etc.), aluminum, aluminum alloy, or aluminum alloy casting (JIS AC etc.), and has a plurality of pockets 9 each being formed as a rectangular configuration having a length of its longitudinal (radial) side longer than that of each needle roller 7 and a length of its circumferential side larger than the diameter of each needle roller 7. The pockets 9 comprise double rows arranged at a same phase in radially outer and inner directions.

As shown in Fig. 5(a), the needle roller 7 contained within each pocket 9 is held therein and prevented from being fallen out therefrom by nailed portion 5 formed near longitudinal side walls 9a of the pockets 9 at either sides of each needle roller 7 along its longitudinal direction by plastically deforming the cage 8 by using a caulking tool such as a punch at a substantially middle portion of the longitudinal length of the needle roller 7 so as to overhang each nailed portion 5 into the pocket 9 over the needle roller 7. The length "Lw" of the nailed portion 5 is set more than 60% of that of the needle roller 7.

If the length of the needle roller 7 is more than 6mm, two nailed portions 5 are formed at each longitudinal side wall 9a of the pocket 9 corresponding to each needle roller 2 equally, i.e. symmetrically with the other two nailed portions 5 formed at the other longitudinal side wall of each pocket 9. The length "Lw" of the nailed portions 5 is set less than 15% of that of the needle rollers 7. Although the length of each needle roller 7 is larger than 6mm, two nailed portions 5 (Fig. 5(b)) may be connected each other and one nailed portion 5 may be provided similarly to the embodiment of Fig. 5(a). In this case, however, the length "Lw" of the nailed portion 5 should be set more than 60% of the length of the needle rollers 7.

Also according to the second embodiment, since the double row needle rollers 7 are adapted to be held by the nailed portions 5 formed by plastically deforming the cage 8 of soft metal material such as high tensile brass casting or aluminum alloy so as to overhang each nailed portion 5 into the pocket 9 over the needle roller 7, it does not increase the processing cost for the majority variety/minority lot production. Contrary to the first embodiment, since one needle roller 7 is held by one pocket 9 in the second embodiment, it is possible to stably hold the needle roller 7 and to prevent the skewing of the needle roller 7. Accordingly it is possible to provide a double row thrust needle roller bearing which can suppress the differential slippage of the needle rollers under a severe working condition and improve its durability.

A dimensional relation between the needle roller 7 and the pocket 9 is established so that the needle roller 7 is guided by the longitudinal side walls 9a of the pocket 9 as shown in Fig. 6. That is, a gap "J" in a thickness direction between the needle roller 7 and the inner surface 5a of the nailed portion 5 is set so that it is larger than a circumferential gap "H" (H<J) between the needle roller 7 and the side wall 9a of the pocket 9. If the gap relation would be H>J, the needle roller 7 will be guided by the inner surface 5a of the nailed portion 5 and thus the behavior of the needle roller 7 will become instable and the problem of absence of oil film will be generated.

### [Third embodiment]

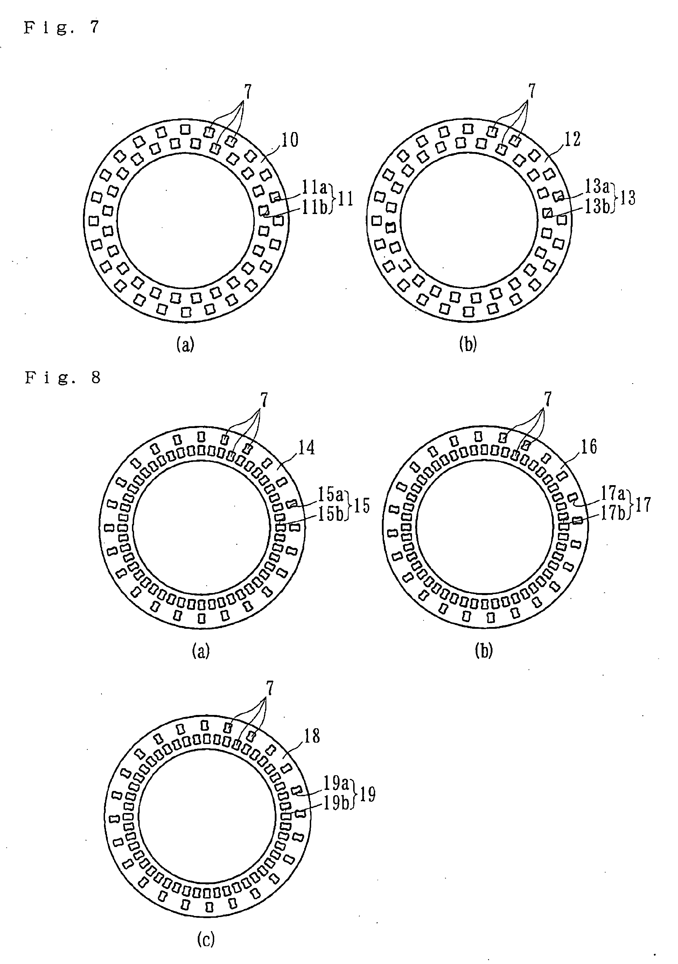

Although the double row thrust needle roller bearing of the present invention has been described with reference to those in which the double row needle rollers are arranged at a same phase each other, it can be applied to that having various needle roller arrangements. Fig. 7 is a plan view of a double row thrust needle roller bearing of a third embodiment of the present invention. Similarly to the second embodiment (Fig. 4), this embodiment has a double row pockets of radially outer and inner rows respectively of same number. However, the arrangement of the pockets is different therefrom.

The double row thrust needle roller bearing shown in Fig. 7(a) comprises a plurality of needle rollers 7, and an annular cage 10 for holding the needle rollers 7 at a predetermined pitch in the circumferential direction. Similarly to the previously described embodiments, the cage 10 is made by cutting soft metal materials such as copper alloy e.g. high tensile brass casting (JIS CAC 3 etc.) and aluminum/bronze casting (JIS CAC 7 etc.), aluminum, aluminum alloy, or aluminum alloy casting (JIS AC etc.), and has a plurality of pockets 11 each being formed as a rectangular configuration having a length of its longitudinal (radial) side longer than that of each needle roller 7 and a length of its circumferential side larger than the diameter of each needle roller 7. The pockets 11 comprise double row arrangement in which each radially outer pockets 11a is arranged at the middle of adjacent radially inner pockets 11b.

Such an arrangement of the double row radially outer and inner pockets 11a and 11b enables not only to increase the strength of the cage 10 but to improve the flowability of lubricant.

The radially outer pockets 11a is not necessary to be arranged at the middle of the radially inner pockets 11b and it may be arranged as shown in Fig. 7(b). The double row thrust needle roller bearing of Fig. 7(b) comprises a plurality of needle rollers 7, and an annular cage 12 for holding the needle rollers 7 at a predetermined pitch in the circumferential direction. Similarly to the previously described embodiments, the cage 12 has a plurality of pockets 13 each being formed as a rectangular configuration having a length of its longitudinal (radial) side longer than that of each needle roller 7 and a length of its circumferential side larger than the diameter of each needle roller 7. The pockets 13 comprise double rows arrangement in which each radially outer pocket 13a is arranged between adjacent radially inner pockets 13b with the phase of the radially outer pockets 13a being slightly staggered from the radially inner pockets 13b.

### [Fourth embodiment]

Fig. 8 is a plan view of a double row thrust needle roller bearing of a fourth embodiment of the present invention. Similarly to the second and third embodiments (Figs. 4 and 7), this embodiment has a double row pockets of radially outer and inner directions. However, the number of the radialy inner pockets is larger than that of the radially outer pockets.

The double row thrust needle roller bearing of Fig. 8(a) comprises a plurality of needle rollers 7, and an annular cage 14 for holding the needle rollers 7 at a predetermined pitch in the circumferential direction. The cage 14 has a plurality of pockets 15 each being formed as a rectangular configuration having a length of its longitudinal (radial) side longer than that of each needle roller 7 and a length of its circumferential side larger than the diameter of each needle roller 7. The pockets 15 comprise double row arrangement of radially outer and inner pockets 15a and 15b. The number of the radially inner pockets 15b is larger than that of the radially outer pockets 15a so that the bearing can be applied to a place in which the radially inner portion of the bearing can support a larger load than the radially outer portion.

A double row thrust needle roller bearing shown in Fig. 8(b) is a modification of the embodiment shown in Fig. 8(a) in which a plurality of pockets 17 are formed in the cage 16 and the number of the radially inner pockets 17b is larger than that of the radially outer pockets 17a. The radially outer pockets 17a are arranged so that they have a phase arrangement of being positioned at the middle of the radially inner pockets 17b.

A double row thrust needle roller bearing shown in Fig. 8(c) is a modification of the embodiment shown in Fig. 8(a) in which a plurality of pockets 19 are formed in the cage 18 and the number of the radially inner pockets 18b is larger than that of the radially outer pockets 18a. The radially outer pockets 19a are arranged so that they have a phase arrangement in which the radially outer pockets 19a correspond neither to the radially inner pockets 19b nor to the middle of them.

### [Fifth embodiment]

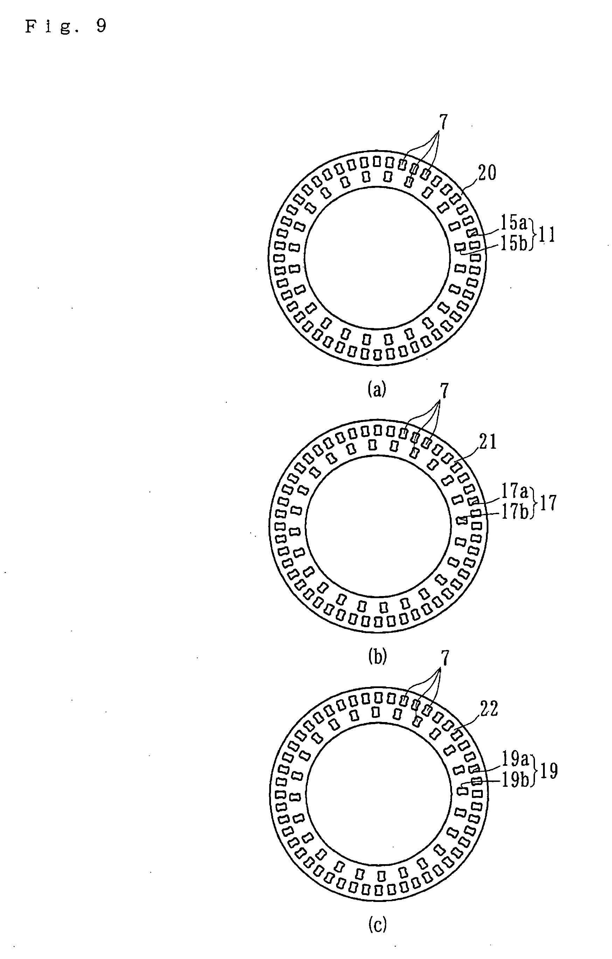

Fig. 9 is a plan view of a double row thrust needle roller bearing of a fifth embodiment of the present invention. Similarly to the fourth embodiment (Fig. 8), this embodiment has a double row pockets of radially outer and inner directions. However, the number of the radialy outer pockets is larger than that of the radially inner pockets.

The double row thrust needle roller bearing of Fig. 9(a) comprises a plurality of needle rollers 7, and an annular cage 20 for holding the needle rollers 7 at a predetermined pitch in the circumferential direction. The plurality of pockets 15 comprise double row arrangement of radially outer and inner pockets 15a and 15b. The number of the radially outer pockets 15a is larger than that of the radially inner pockets 15b so that the bearing can be applied to a place in which the radially outer portion of the bearing can support a larger load than the radially inner portion.

A double row thrust needle roller bearing shown in Fig. 9(b) is a modification of the embodiment shown in Fig. 9(a) in which a plurality of pockets 17 are formed in the cage 21 and the number of the radially outer pockets 17a is larger than that of the radially inner pockets 17b. The radially outer pockets 17a are arranged so that they have a phase arrangement of being positioned at the middle of the radially inner pockets 17b.

A double row thrust needle roller bearing shown in Fig. 9(c) is a modification of the embodiment shown in Fig. 9(a) in which a plurality of pockets 19 are formed in the cage 22 and the number of the radially outer pockets 19a is larger than that of the radially inner pockets 19b. The radially outer pockets 19a are arranged so that they have a phase arrangement in which the radially outer pockets 19a correspond neither to the radially inner pockets 19b nor to the middle of them.

### [Sixth embodiment]

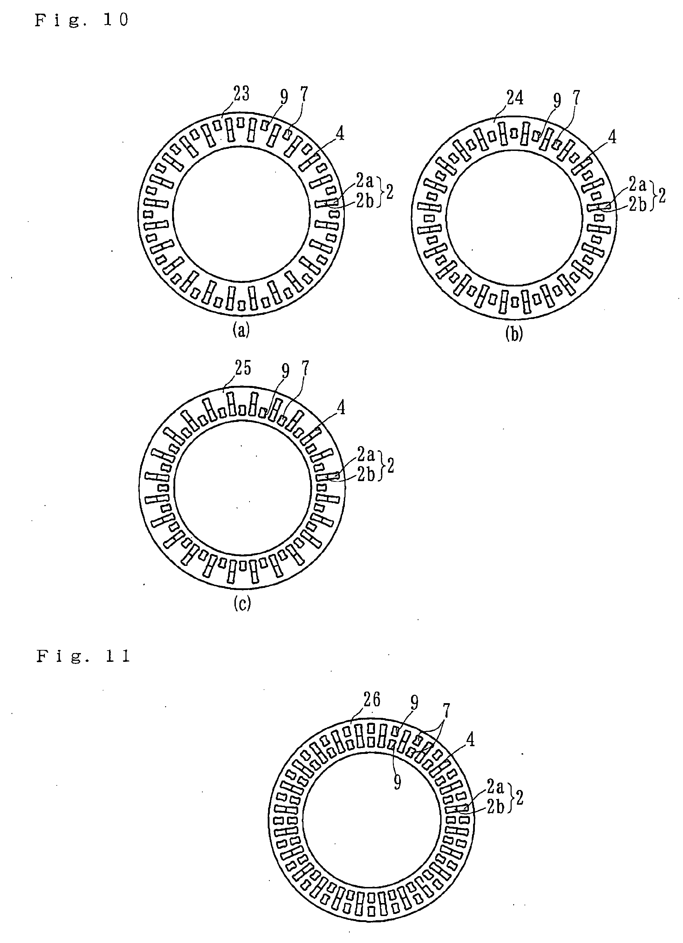

Fig. 10 is a plan view of a double row thrust needle roller bearing of a sixth embodiment of the present invention. This embodiment is a modification of the previously described first embodiment (Fig. 1).

The double row thrust needle roller bearing of Fig. 10(a) comprises a plurality of needle rollers 2 and 7, and an annular cage 23 for holding the needle rollers 2 and 7 at a predetermined pitch in the circumferential direction. The cage 23 has a plurality of pockets 4 each being formed as a rectangular configuration having a length of its longitudinal (radial) side longer than that of double row needle rollers 2 (including radially outer and inner needle rollers 2a and 2b) and a length of its circumferential side larger than the diameter of each needle roller 2 as well as single row pockets 9 for holding needle rollers 7 between pockets 4 at the radially outer side thereof.

The double row thrust needle roller bearing of Fig. 10(b) is a modification of the embodiment of Fig. 10(a) and comprises a plurality of needle rollers 2 and 7, and an annular cage 24 for holding the needle rollers 2 and 7 at a predetermined pitch in the circumferential direction. The cage 24 has pockets 4 for the double row needle rollers 2a and 2b and single row pockets 9 arranged at substantially the middle of the adjacent pockets 4 for holding the needle rollers 7.

The double row thrust needle roller bearing of Fig. 10(c) is also a modification of the embodiment of Fig. 10(a) and comprises a plurality of needle rollers 2 and 7, and an annular cage 25 for holding the needle rollers 2 and 7 at a predetermined pitch in the circumferential direction. The cage 25 has pockets 4 and single row pockets 9 for holding needle rollers 7 between pockets 4 at the radially inner side thereof.

### [Seventh embodiment]

Fig. 11 is a plan view of a double row thrust needle roller bearing of a sixth embodiment of the present invention. This embodiment is a modification of the previously described sixth embodiment (Fig. 10).

This double row thrust needle roller bearing comprises a plurality of needle rollers 2 and 7, and an annular cage 26 for holding the needle rollers 2 and 7 at a predetermined pitch in the circumferential direction. The cage 26 has a plurality of pockets 4 each being formed as a rectangular configuration having a length of its longitudinal (radial) side longer than that of double row needle rollers 2 (including radially outer and inner needle rollers 2a and 2b) and a length of its circumferential side larger than the diameter of each needle roller 2 as well as double row pockets 9 for holding needle rollers 7 between pockets 4.

According to the double row thrust needle roller bearing of the present invention, since the double row needle rollers are adapted to be held by the nailed portions formed by plastically deforming the cage of soft metal material such as high tensile brass casting or aluminum alloy so as to overhang each nailed portion into the pocket over the needle roller, it is possible to provide a double row thrust needle roller bearing in which the nailed portions can be easily formed and thus the needle rollers can be held with a simple structure and which can suppress the differential slippage of the needle rollers under a severe working condition and improve its durability without increasing the processing cost for the majority variety/minority lot production.

### [Applicability in industry]

The double row thrust needle roller bearing of the present invention can be incorporated into apparatus such as an automatic transmission and a compressor of air conditioner of an automobile, a continuously variable transmission, an electric brake etc. and can be used as a double row thrust needle roller bearing for supporting the thrust load applied to said apparatus, and especially suitable for a double row thrust needle roller bearing of majority variety/minority lot production.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

## Claims

1. A double row thrust needle roller bearing (1) comprising a plurality of needle rollers (2) arranged at at least two rows in a radial direction, and an annular cage (3) formed with a plurality of pockets (4) for holding needle rollers (2) **characterized in that**:
each pocket (4) being formed as a rectangular configuration having a length of its radial side longer than that of each needle roller (2) and a length of its circumferential side larger than the diameter of each needle roller (2), and
each needle roller (2) being held within each pocket (4) of the cage (3) by nailed portions (5) formed near radially extending side walls (4a) of the pockets (4) at either sides of each needle roller (2) along its longitudinal direction by plastically deforming the cage (3) at a substantially middle portion of the longitudinal length of the needle roller (2) so as to overhang each nailed portion (5) into the pocket (4) over the needle roller (2).

2. A double row thrust needle roller bearing of claim 1 wherein said cage (3) is made by cutting soft metal material.

3. A double row thrust needle roller bearing of claim lor 2 wherein said nailed portion (5) is formed one at one longitudinal side wall of each pocket (4) corresponding to each needle roller (2), and the length of each nailed portion (5) is set 60% or more the length of each needle roller (2).

4. A double row thrust needle roller bearing of claim 1 or 2 wherein two nailed portions (5) are formed at each longitudinal side wall of the pocket (4) corresponding to each needle roller (2) symmetrically with the other two nailed portions (5) formed at the other longitudinal side wall of each pocket (4), and the length of each nailed portion (5) is set 15% or more the length of each needle roller (2).

5. A double row thrust needle roller bearing of any one of claims 1 through 4 wherein a clearance between the needle roller and the pocket in the thickness direction (G) of the cage (3) is larger than that in the circumferential direction (F).
